# FASCICULE DE BREVET EUROPEEN

(11) **EP 4 069 580 B1**
(45) Date de publication et mention de la délivrance du brevet: **07.05.2025**
(21) Numéro de dépôt: 20841975.4
(22) Date de dépôt: 04.12.2020
(51) Int. Cl.: B63B 1/00, G01V 1/38, B63B 49/00

(54) **SYSTÈME DE DÉTECTION D'UN OU PLUSIEURS MAMMIFÈRES MARINS ET PROCÉDÉ DE DÉTECTION CORRESPONDANT**
SYSTEM ZUR ERKENNUNG EINES ODER MEHRERER MEERESSÄUGETIERE UND ENTSPRECHENDES ERKENNUNGSVERFAHREN
SYSTEM FOR DETECTING ONE OR MORE MARINE MAMMALS AND CORRESPONDING DETECTION METHOD

(30) Priorité: 05.12.2019 FR 1913810
(43) Date de publication de la demande: 12.10.2022
(73) Titulaire: SERCEL, 44470 Carquefou (FR)
(72) Inventeur: L'HER, Christophe, 44470 CARQUEFOU (FR)
(74) Mandataire: Ipsilon
(86) Numéro de dépôt international: PCT/FR2020/052284
(87) Numéro de publication internationale: WO 2021/111092

(56) Documents cités:
- JP-A- S60 120 226
- US-A- 5 563 849
- ASHDOWN J D ET AL: "High-rate ultrasonic communication through metallic barriers using MIMO-OFDM techniques", MILITARY COMMUNICATIONS CONFERENCE, 2012 - MILCOM 2012, IEEE, 29 October 2012 (2012-10-29), pages 1 - 6, XP032315648, ISBN: 978-1-4673-1729-0, DOI: 10.1109/MILCOM.2012.6415837

## Description

### DOMAINE DE L'INVENTION

La présente invention concerne de manière générale la détection d'un ou plusieurs mammifères marins.

### ART ANTERIEUR

Il est souhaitable de pouvoir détecter la présence de mammifères marins dans un environnement donné autour d'un engin marin, tel qu'un navire, pour non seulement ne pas porter atteinte à ces mammifères marins, mais également pour éviter une collision.

Ainsi, il est utile de pouvoir s'assurer de l'absence de mammifères marins à proximité d'activités bruyantes, telles que des activités de forage réalisées par exemple par des navires de forage, ou encore de pouvoir détecter la présence éventuelle d'un mammifère marin afin d'éviter une collision avec des bateaux tels que des ferries, cargos, et navires de croisière. La détection de la présence éventuelle de mammifères marins est aussi utile pour éviter une pêche accidentelle de ces mammifères marins, ou pour indiquer leur présence à des fins d'observation.

Le demandeur de la présente invention a développé un système de détection connu sous le nom de "QuietSea" (marque déposée), permettant la détection et la localisation de mammifères marins. Ce système de détection comprend des capteurs qui sont remorqués derrière un navire, en étant par exemple intégrés dans une flûte sismique.

Des modes de réalisations de système de détection comprenant des capteurs remorqués derrière un navire sont décrits par exemple dans le brevet américain délivré sous le numéro US 8937847.

Cependant, une telle solution qui utilise le remorquage de capteurs entraine un encombrement global important du navire et des coûts de maintenance non négligeables.

Par ailleurs, si la vitesse du navire est trop importante, les capteurs risquent de ne pas être suffisamment immergés et de ne plus permettre de détecter d'éventuels mammifères marins dans l'environnement du navire.

Le document US5563849 décrit un système de suivi acoustique comprenant des hydrophones et conçu pour permettre aux scientifiques et aux pêcheurs de suivre les dauphins et les baleines. Le document ASHDOWN J. D. ET AL: "High-rate ultrasonic communication through metallic barriers using MIMO-OFOM techniques" propose une méthode pour transmettre des données à haut-débit à travers des barrières métalliques.

La présente invention a pour but de proposer un nouvel engin marin équipé d'un système de détection d'un ou de plusieurs mammifères marins et un nouveau procédé de détection correspondant permettant de pallier tout ou partie des problèmes exposés ci-dessus.

### RESUME DE L'INVENTION

A cet effet, l'invention a pour objet un engin marin selon la revendication 1.

Le ou les capteurs du système de détection sont ainsi placés de manière à détecter les vocalises de mammifère(s) marin(s) en utilisant la coque de l'engin marin comme une « membrane » pour la transmission desdites vocalises.

Un tel agencement du ou des capteurs du côté intérieur sec de la coque, permet d'éviter l'utilisation de solutions invasives au niveau de la coque, telles que des solutions prévoyant un positionnement côté extérieur de la coque avec perçage à travers la coque pour le passage d'un câble permettant de récupérer les signaux électriques produits par les capteurs.

L'installation du système de détection est ainsi facilitée et les coûts sont réduits.

En particulier, les contraintes de maintenance sont réduites puisque la coque protège le ou les capteurs du système de détection vis-à-vis d'un encrassement biologique et/ou de dégradation liés à l'environnement marin et aux chocs auxquels le ou les capteurs sont susceptibles d'être soumis, comme cela peut être le cas dans les solutions ou les capteurs sont situés à l'extérieur du navire, notamment sur un câble remorqué, usuellement appelé "streamer".

L'engin marin peut aussi comporter une ou plusieurs des caractéristiques suivantes prises dans toute combinaison techniquement admissible.

Selon une caractéristique optionnelle, le système de détection comprend un dispositif d'acquisition de bruit permettant de recevoir des ondes acoustiques, telles que des vibrations, correspondant à du bruit, résultant par exemple d'un moteur équipant ledit engin, et de les convertir en signaux électriques,
et le système de détection est configuré pour soustraire les signaux électriques fournis par le dispositif d'acquisition de bruit, des signaux électriques fournis par ledit au moins un capteur qui est couplé à la coque.

Selon une caractéristique optionnelle, ledit engin marin présentant une ligne de flottaison, ledit au moins un capteur est situé sous la ligne de flottaison.

Selon une caractéristique optionnelle, ledit au moins un capteur comprend des capteurs situés du côté bâbord de la coque, et/ou des capteurs situés du côté tribord de la coque.

Selon une caractéristique optionnelle, les capteurs comprennent des capteurs situés du côté de la proue de la coque.

Selon une caractéristique optionnelle, ledit au moins un capteur comprend au moins un accéléromètre.

Selon une caractéristique optionnelle, ledit au moins un capteur comprend au moins un capteur parmi la liste de capteurs suivante :
- capteur vectoriel,
- vélocimètre,
- capteur de pression,
- élément piézoélectrique.
Selon une variante de réalisation, on peut prévoir que ledit au moins un capteur comprend un hydrophone.

Selon une caractéristique optionnelle, ledit au moins un capteur comprend au moins un capteur 3-axes.

Selon une caractéristique optionnelle, le système de détection comprend au moins un support de fixation permettant de fixer ledit au moins un capteur à la coque, du côté intérieur de la coque, ledit au moins un support de fixation étant en outre configuré pour filtrer une ou des fréquences données correspondant à du bruit, distincte(s) de la ou des fréquences de vocalise d'un ou des mammifères marins à détecter.

Selon une caractéristique optionnelle, ledit au moins un capteur comprend au moins un capteur qui présente une sensibilité de réception de fréquence acoustique dans la plage ]0 Hz - 200 kHz], de préférence dans la plage [10 Hz - 30 kHz].

Selon une caractéristique optionnelle, ledit engin marin est un navire, ledit navire étant de préférence choisi parmi les types de navire suivants : navire de croisière, ferry, cargo, navire de forage, et navire de pêche.

Il est aussi proposé un procédé de détection d'un ou plusieurs mammifères marins selon la revendication 11.

Selon une caractéristique optionnelle, les signaux acoustiques reçus par ledit au moins un capteur sont des signaux naturels émis par un ou plusieurs mammifères marins, de préférence dans la plage ]0 Hz - 200 kHz], par exemple dans la plage [10 Hz - 30 kHz]..

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la Figure 1 est une vue schématique en coupe transversale d'une coque d'un navire munie d'un système de détection selon un mode de réalisation de l'invention, le système de détection comprenant au moins un capteur de chaque côté, bâbord et tribord, de la coque ;
- [Fig. 2] la Figure 2 est une vue schématique en coupe longitudinal d'une coque d'un navire munie d'un système de détection selon un autre mode de réalisation de l'invention, le système comprenant plusieurs capteurs logés dans la coque, à l'avant de la coque ;

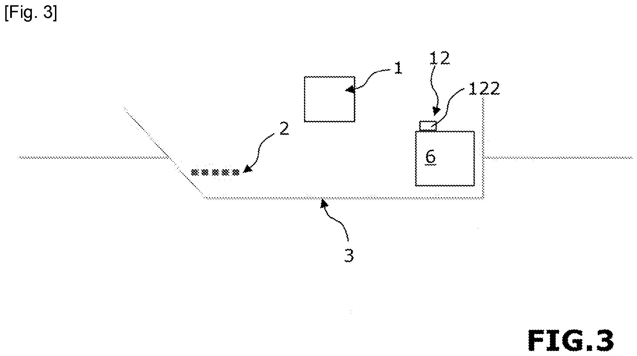

- [Fig. 3] la Figure 3 est une vue schématique en coupe longitudinale d'une coque d'un navire munie d'un système de détection selon un autre mode de réalisation de l'invention, le système comprenant plusieurs capteurs logés dans la coque, à l'avant, ainsi qu'un dispositif de d'acquisition de bruit logé à l'arrière de la coque ;
- [Fig. 4] la Figure 4 est une vue schématique en coupe transversale d'une coque d'un navire munie d'un système de détection selon un autre mode de réalisation de l'invention, le système de détection comprenant au moins un support de fixation de capteur de chaque côté, bâbord et tribord, de la coque ;
- [Fig. 5] la Figure 5 est un schéma bloc comprenant des étapes d'un procédé de de détection selon un mode de réalisation de l'invention.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

Dans la suite de la description, il est proposé des modes de réalisation d'engins marins munis de systèmes de détection permettant de détecter un ou des mammifères marins, qui comprennent un ou des capteurs situés du côté intérieur, sec, de la coque de l'engin marin pour détecter un ou des mammifères marins, grâce à leurs vocalises en utilisant la coque de l'engin comme membrane de transmission de signaux acoustiques. Le système de détection peut être considéré comme un système de surveillance acoustique passif ou "PAM" (pour Passive Acoustique Monitoring en anglais).

### Engin marin

Dans la suite de la description, il est fait référence à un engin marin qui est un navire (ou bateau) mais la description s'applique aussi à d'autres types d'engins marins, notamment des sous-marins, ou drones sous-marins.

L'engin marin peut ainsi être un navire de croisière, un ferry, un cargo, un navire de forage, un navire de pêche.

L'invention trouve une application particulièrement avantageuse pour les navires ne pouvant remorquer des équipements externes, tels que des câbles, en raison de contraintes opérationnelles, telle que la vitesse du navire.

Pour autant, les navires aptes à être équipés avec un tel système de détection peuvent aussi comprendre des bateaux qui remorquent des équipements externes, par exemple pour la recherche de pétrole et/ou gaz.

### Capteur(s)

Le système de détection comprend au moins un capteur 2 pour recevoir les ondes acoustiques émises par un ou des mammifères marins. Dans la suite de la description il est fait référence à plusieurs capteurs mais l'invention s'applique aussi à un capteur.

Les capteurs 2 du système de détection, utilisés pour recevoir les ondes acoustiques émises par un ou des mammifères marins 4, convertissent les ondes acoustiques en signaux électriques. Les ondes acoustiques reçues par les capteurs peuvent inclure des vocalises produites par le ou les mammifères marins, mais aussi d'autres signaux acoustiques correspondant à du bruit résultant par exemple du fonctionnement de l'engin marin.

Selon des modes de réalisation, le système de détection permet de détecter des mammifères marins, tels que le cachalot, émettant à 12kHz et des mammifères marins, tel que le rorqual, émettant à 20Hz. A cet effet, tout ou partie des capteurs 2 présentent une sensibilité de réception de signal dans la plage ]0 Hz - 200 kHz], de préférence dans la plage [10 Hz - 30 kHz]. Les signaux reçus par les capteurs sont des signaux naturels, par opposition à des signaux modulés générés par un système électronique. Ces signaux naturels incluent les signaux acoustiques émis par un ou des mammifères marins dont on cherche à détecter la présence.

Les capteurs peuvent être agencés sous forme d'un réseau de capteurs de manière à permettre de recevoir des signaux des capteurs distincts les uns des autres. On peut aussi prévoir que des capteurs soient associés pour fournir un signal correspondant à l'addition des signaux fournis par lesdits capteurs associés.

Selon un mode de réalisation, les capteurs 2 comprennent des accéléromètres. On peut aussi prévoir que les capteurs 2 puissent être choisis parmi les types de capteurs suivants : accéléromètre, capteur vectoriel, vélocimètre, capteur de pression, élément piézoélectrique. Selon une variante de réalisation, un ou des hydrophones peuvent être utilisés en tant que capteurs.

Avantageusement, tout ou partie des capteurs 2 comprend un capteur 3-axes. Un capteur 3-axes peut être réalisé à l'aide de trois capteur mono-axe, tels que des accéléromètres de type microsystème électromécanique (MEMS accelerometer en anglais). L'usage de capteur(s) 3-axes permet d'améliorer la détection des vocalises et le rapport signal sur bruit du fait que certains bruits se propagent dans la coque selon différents modes ou directions.

### Système d'analyse

Les signaux électriques produits par les capteurs 2 sont acquis par un système d'analyse 1 qui permet de détecter à partir de ces signaux la présence d'un mammifère marin. Une donnée de détection de mammifère marin peut se présenter sous la forme d'une probabilité de présence de ce mammifère marin.

Le système d'analyse est un système électronique et informatique. Le système d'analyse comprend un système d'acquisition des signaux électriques fournis par les capteurs 2, et de préférence un système électronique de conditionnement, tel qu'un préamplificateur. Le système d'analyse comprend aussi un module d'analyse des signaux permettant d'exécuter un algorithme pour détecter la présence d'un ou plusieurs mammifères marins en fonction de signaux électriques fournis par les capteurs 2. De tels algorithmes sont bien connus de l'Homme du Métier et ne seront pas donc pas détaillés ici. Un algorithme ou méthode de détection d'un ou plusieurs mammifères marins est par exemple fourni dans le brevet US 9625592.

Selon un mode de réalisation particulier, le système d'analyse est aussi configuré pour traiter les signaux reçus des capteurs 2 selon une technique appelée "beamforming", ou "formation de faisceaux", qui est une technique de traitement du signal issu d'un réseau de capteurs de manière à focaliser l'écoute du ou des mammifères marins dans une direction donnée.

On peut aussi prévoir que le système d'analyse soit configuré pour non seulement détecter mais aussi classifier et/ou localiser le ou les mammifères marins en fonction de signaux électriques fournis par les capteurs 2.

Le système d'analyse 1 se présente par exemple sous la forme d'un processeur et d'une mémoire de données dans laquelle sont stockées des instructions informatiques exécutables par ledit processeur, ou encore sous la forme d'un microcontrôleur.

Autrement dit, les fonctions et étapes décrites peuvent être mise en œuvre sous forme de programme informatique ou via des composants matériels (p. ex. des réseaux de portes programmables). En particulier, les fonctions et étapes opérées par le système d'analyse peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques.

Lorsqu'il est précisé que le système ou un module est configuré(e) pour réaliser une opération donnée, cela signifie que le système comprend des instructions informatiques et les moyens d'exécution correspondants qui permettent de réaliser ladite opération et/ou que le système comprend des composants électroniques correspondants.

### Dispositif d'acquisition de bruit

Selon un mode de réalisation particulier, le système de détection comprend un dispositif d'acquisition 12 de bruit permettant de recevoir (capter) des ondes acoustiques correspondant à du bruit, résultant par exemple du fonctionnement d'un moteur équipant ledit engin, de les convertir sous forme de signaux électriques et de les transmettre au système d'analyse 1.

Selon un aspect particulier, le dispositif d'acquisition 12 du bruit ambiant comprend au moins un capteur 122 qui est agencé pour capter le bruit à soustraire. Ledit au moins un capteur 122 peut aussi comprendre un ou des capteurs choisis parmi les types de capteurs suivants : accéléromètre, capteur vectoriel, vélocimètre, capteur de pression, élément piézoélectrique, et hydrophone.

Ainsi, on peut prévoir que le dispositif d'acquisition 12 du bruit ambiant comprend au moins un capteur 122 positionné sur un moteur 6 de propulsion de l'engin. On peut aussi prévoir que lorsque l'engin est muni d'un générateur électrique, celui-ci soit équipé d'un capteur permettant de mesurer le bruit du générateur.

Le système d'analyse 1 comprend un module de traitement qui est configuré pour soustraire les signaux fournis le dispositif d'acquisition 12 de bruit aux signaux fournis par les capteurs 2 qui sont en contact avec la coque.

Les capteurs 2 en contact avec la coque peuvent recevoir aussi bien les signaux acoustiques dans l'environnement marin autour de l'engin que le bruit résultant du fonctionnement de l'engin. Un tel traitement de soustraction du bruit permet d'améliorer le rapport signal sur bruit pour les signaux fournis par les capteurs 2 en contact avec la coque utilisés pour détecter le ou les mammifères marins.

Le dispositif d'acquisition de bruit peut aussi être configuré pour recevoir des signaux d'échosondeurs, que le dispositif d'acquisition convertit en signaux électriques puis fournit au système d'analyse. Le système d'analyse peut soustraire ces signaux électriques (correspondant aux signaux d'échosondeurs) aux signaux fournis par les capteurs 2.

Selon un aspect particulier, le ou chaque capteur du dispositif d'acquisition 12 de bruit est découplé acoustiquement de la coque pour ne pas recevoir les signaux acoustiques transmis par la coque qui peuvent inclure les vocalises du ou des mammifères marins.

### Agencement des capteurs

L'emplacement des capteurs 2 peut être choisi en fonction de différentes contraintes comprenant par exemple la localisation des bruits d'écoulement, la position des membrures de coque, les dimensions des tôles qui relient les membrures, et/ou la localisation des bruits de machine. Selon un mode de réalisation particulier, il n'est pas nécessaire de prévoir une adaptation de la coque. En variante, on peut prévoir que, lors de la construction de la coque, celle-ci soit concue avec des tôles adaptées, par exemple en dimension, pour permettre un couplage optimal des capteurs à des endroits prédéfinis de la coque.

Avantageusement, les capteurs 2 sont situés dans la coque de préférence sous la ligne de flottaison du navire.

Selon un mode de réalisation particulier, les capteurs 2 sont situés d'un seul côté de la coque par rapport à l'axe longitudinal de l'engin (correspondant à l'axe de déplacement de l'engin).

Les capteurs 2 sont placés de manière à détecter les vocalises du ou des mammifères marins en utilisant la coque de navire comme une membrane pour la transmission desdites vocalises.

En particulier, contrairement au document *"*High-rate ultrasonic communication through metallic barriers using MIMO-OFOM techniques" de ASHDOWN J. D., l'invention ne vise pas à transmettre des données à haut-débit à travers des barrières métalliques, mais que le signal brut provenant des mammifères marins soit transmis aux capteurs 2 par l'intermédiaire de la barrière formée par la coque.

Par exemple, la ou chaque tôle sur laquelle est fixée un capteur pourrait être choisie en fonction de la fréquence de résonnance de cette tôle. La fréquence de résonnance de la tôle dépend de ses dimensions de sorte que la tôle peut être sélectionnée en fonction de ses dimensions pour obtenir une fréquence de résonnance donnée. En particulier, la ou chaque tôle sur laquelle peut être fixée un capteur est choisie de manière à obtenir une fréquence de résonnance située dans la plage de fréquences des vocalises du ou des mammifères que l'on souhaite détecter.

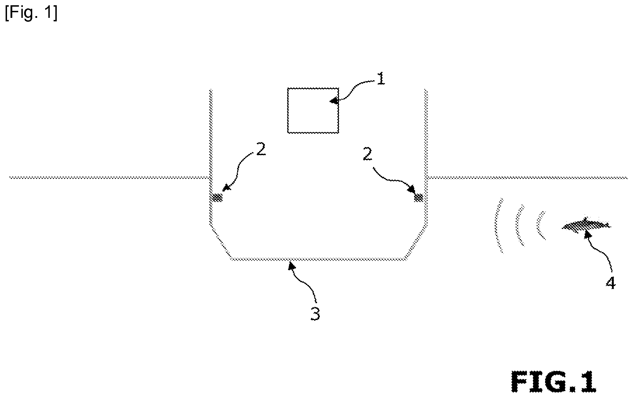

Comme illustré à la figure 1, les capteurs peuvent comprendre des capteurs situés du côté bâbord de la coque, et des capteurs 2 situés du côté tribord de la coque.

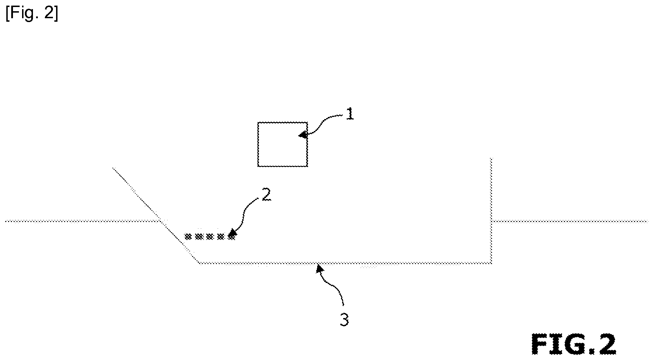

Comme illustré à la figure 2, les capteurs 2 peuvent être situés du côté de la proue de la coque. On peut aussi prévoir que des capteurs 2 soient situés du côté de la poupe de la coque. Néanmoins il peut être préférable de privilégier un positionnement des capteurs à un endroit autre que l'arrière de la coque dans le cas où cette partie arrière est soumise à des bruits, tels que des bruits de moteur.

Préférentiellement, l'engin est dépourvu de capteur acoustique du côté extérieur de la coque.

### Support de fixation

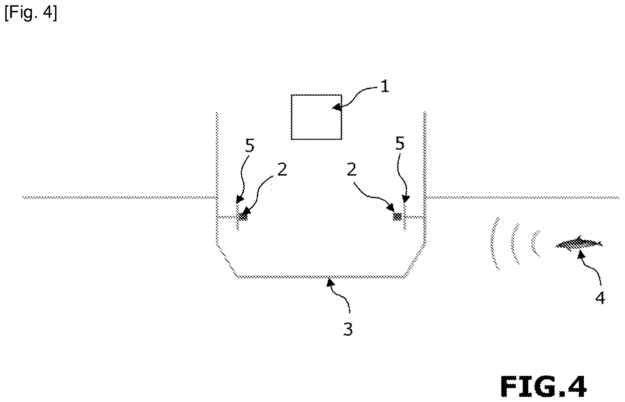

Selon un aspect particulier illustré à la Figure 4, le système de détection comprend des supports de fixation 5 permettant de fixer les capteur 2 à l'intérieur de la coque 3.

Chaque support de fixation 5 est en outre configuré, par exemple du fait de sa matière, pour filtrer une ou des fréquences données correspondant à des signaux de bruit, par exemple pour filtrer la ou les fréquences résultant du fonctionnement d'une hélice de l'engin, tout en conservant les fréquences correspondant aux vocalises du ou des mammifères marins dont on souhaite détecter l'éventuelle présence.

### Procédé

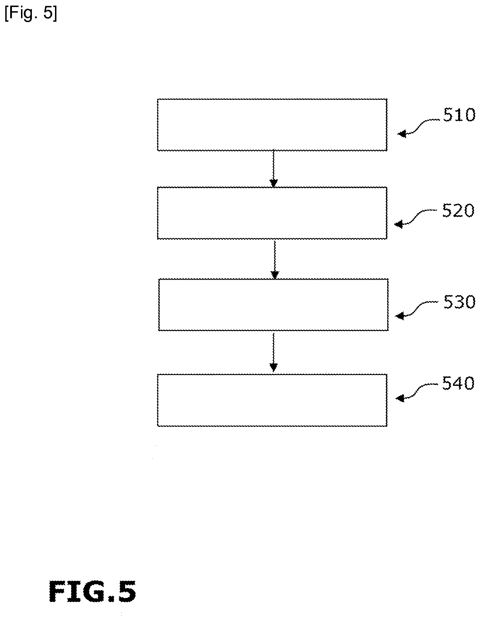

En référence à la Figure 5, il est proposé ci-après un procédé de détection d'un ou plusieurs mammifères marins qui comprend les étapes suivantes. A l'étape 510, des capteurs 2 sont couplés à la coque 3 d'un navire, du côté intérieur de la coque 3, de manière à pouvoir capter les signaux acoustiques transmis par la coque. Le couplage peut comprendre la sélection d'une ou plusieurs tôles de la coque dont la ou chaque fréquence de résonnance est adaptée à la plage de fréquences des vocalises que l'on souhaite détecter, ainsi que la fixation d'un ou plusieurs capteurs 2 à la ou chaque tôle sélectionnée. A l'étape 520, les capteurs 2 reçoivent des signaux acoustiques par l'intermédiaire de la coque 3. Les signaux acoustiques reçus sont des signaux naturels, qui peuvent inclure des signaux acoustiques provenant de l'environnement marin dans lequel se situe le navire, tels que des vocalises du ou des mammifère marins dont on cherche à détecter l'éventuelle présence, et des signaux de bruit résultant par exemple du moteur du navire. A l'étape 530 les signaux acquis par les capteurs sont analysés par le système d'analyse, ce qui permet de fournir une information relative à la présence du ou des mammifères marins, et ainsi, à l'étape 540, de détecter la présence du ou des mammifères marins en fonction du résultat de l'analyse.

L'invention n'est pas limitée aux modes de réalisation illustrés dans les dessins.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Engin marin présentant une coque (3) et comprenant un système de détection permettant de détecter un ou des mammifères marins (4), ledit système de détection comprenant :
- au moins un capteur (2) permettant de recevoir des signaux acoustiques et de les convertir en signaux électriques; et
- un système d'analyse (1) configuré pour analyser les signaux électriques fournis par ledit au moins un capteur (2) et détecter la présence d'un ou plusieurs mammifères marins (4) en fonction de l'analyse desdits signaux électriques;
**caractérisé en ce que** ledit au moins un capteur (2) est couplé à la coque (3) du côté intérieur de la coque (3) pour permettre de recevoir des signaux acoustiques par l'intermédiaire de la coque (3),
dans lequel, la coque comprenant des membrures et des tôles reliant les membrures entre elles, ledit au moins un capteur (2) est fixé à au moins une tôle dont la fréquence de résonnance est comprise dans la plage de fréquences acoustiques de vocalises de mammifères marins, de préférence dans la plage ]0 Hz - 200 kHz], par exemple dans la plage [10 Hz - 30 kHz].

2. Engin marin selon la revendication 1, dans lequel le système de détection comprend un dispositif d'acquisition (12) de bruit permettant de recevoir des ondes acoustiques, telles que des vibrations, correspondant à du bruit,
résultant par exemple d'un moteur (6) équipant ledit engin, et de les convertir en signaux électriques,
et en ce que le système de détection est configuré pour soustraire les signaux électriques fournis par le dispositif d'acquisition (12) de bruit, des signaux électriques fournis par ledit au moins un capteur (2) qui est couplé à la coque (3).

3. Engin marin selon l'une quelconque des revendications 1 à 2, dans lequel ledit engin marin présentant une ligne de flottaison, ledit au moins un capteur (2) est situé sous la ligne de flottaison.

4. Engin marin selon l'une quelconque des revendications 1 à 3, dans lequel ledit au moins un capteur (2) comprend des capteurs (2) situés du côté bâbord de la coque, et/ou des capteurs (2) situés du côté tribord de la coque.

5. Engin marin selon l'une quelconque des revendications 1 à 4, dans lequel les capteurs (2) comprennent des capteurs (2) situés du côté de la proue de la coque.

6. Engin marin selon l'une quelconque des revendications 1 à 5, dans lequel ledit au moins un capteur (2) comprend au moins un capteur parmi la liste de capteurs suivante :
- accéléromètre,
- capteur vectoriel,
- vélocimètre,
- capteur de pression,
- élément piézoélectrique.

7. Engin marin selon l'une quelconque des revendications 1 à 6, dans lequel ledit au moins un capteur (2) comprend au moins un capteur 3-axes.

8. Engin marin selon l'une quelconque des revendications 1 à 7, dans lequel le système de détection comprend au moins un support de fixation (5) permettant de fixer ledit au moins un capteur (2) à la coque, du côté intérieur de la coque (3), ledit au moins un support de fixation (5) étant en outre configuré pour filtrer une ou des fréquences données correspondant à du bruit, distincte(s) de la ou des fréquences de vocalise d'un ou des mammifères marins à détecter.

9. Engin marin selon l'une quelconque des revendications 1 à 8, dans lequel ledit au moins un capteur (2) comprend au moins un capteur qui présente une sensibilité de réception de fréquence acoustique dans la plage ]0 Hz - 200 kHz], de préférence dans la plage [10 Hz - 30 kHz].

10. Engin marin selon l'une quelconque des revendications 1 à 9, dans lequel ledit engin marin est un navire, ledit navire étant de préférence choisi parmi les types de navire suivants : navire de croisière, ferry, cargo, navire de forage, et navire de pêche.

11. Procédé de détection d'un ou plusieurs mammifères marins, ledit procédé comprenant les étapes suivantes :
- coupler (510) au moins un capteur (2) à la coque (3) d'un engin marin, du côté intérieur de la coque (3) ;
- recevoir (520) à l'aide dudit au moins un capteur (2) des signaux acoustiques par l'intermédiaire de la coque (3) ;
- analyser (530) les signaux fournis par ledit au moins un capteur (2) ; et
- détecter (540) la présence d'un ou de plusieurs mammifères marins (4) en fonction de ladite analyse ;
et, la coque (3) de l'engin comprenant des membrures reliées entre elles par des tôles de différentes dimensions, le couplage dudit au moins un capteur à la coque (3) de l'engin marin comprend les étapes de :
- sélection parmi lesdites tôles, d'au moins une tôle dont la fréquence de résonnance est comprise dans la plage de fréquences des ondes acoustiques émises par un ou des mammifères marins ; et
- couplage dudit au moins un capteur (2) à ladite au moins une tôle sélectionnée.

12. Procédé la revendication 11, **caractérisé en ce que** les signaux acoustiques reçus par ledit au moins un capteur (2) sont des signaux naturels émis par un ou plusieurs mammifères marins, de préférence dans la plage ]0 Hz - 200 kHz], par exemple dans la plage [10 Hz - 30 kHz].

## Patentansprüche

1. Wasserfahrzeug, das einen Rumpf (3) aufweist und ein Detektionssystem umfasst, das es ermöglicht, ein oder mehrere Meeressäugetiere (4) zu detektieren, wobei das Detektionssystem umfasst:
- mindestens einen Sensor (2), der es ermöglicht, Schallsignale zu empfangen und sie in elektrische Signale umzuwandeln; und
- ein Analysesystem (1), das dazu ausgestaltet ist, die von dem mindestens einen Sensor (2) ausgegebenen elektrischen Signale zu analysieren und das Vorhandensein eines oder mehrerer Meeressäugetiere (4) in Abhängigkeit von der Analyse der elektrischen Signale zu detektieren; **dadurch gekennzeichnet, dass** der mindestens eine Sensor (2) mit dem Rumpf (3) auf der Innenseite des Rumpfes (3) gekoppelt ist, um es zu ermöglichen, Schallsignale über den Rumpf (3) zu empfangen,
wobei, wenn der Rumpf Spanten und die Spanten untereinander verbindende Bleche umfasst, der mindestens eine Sensor (2) an mindestens einem Blech befestigt ist, dessen Resonanzfrequenz in dem Schallfrequenzbereich von Lauten von Meeressäugetieren enthalten ist, bevorzugt in dem Bereich ]0 Hz - 200 kHz], zum Beispiel in dem Bereich [10 Hz - 30 kHz].

2. Wasserfahrzeug nach Anspruch 1, wobei das Detektionssystem eine Geräuscherfassungsvorrichtung (12) umfasst, die es ermöglicht, Schallwellen wie etwa Schwingungen zu empfangen, die Geräuschen entsprechen und beispielsweise von einem Motor (6) herrühren, mit dem das Fahrzeug ausgestattet ist, und sie in elektrische Signale umzuwandeln,
und dadurch, dass das Detektionssystem dazu ausgestaltet ist, die von der Geräuscherfassungsvorrichtung (12) ausgegebenen elektrischen Signale von den elektrischen Signalen zu subtrahieren, die von dem mindestens einen Sensor (2) ausgegeben werden, der mit dem Rumpf (3) gekoppelt ist.

3. Wasserfahrzeug nach einem der Ansprüche 1 bis 2, wobei, wenn das Wasserfahrzeug eine Wasserlinie aufweist, der mindestens eine Sensor (2) unter der Wasserlinie gelegen ist.

4. Wasserfahrzeug nach einem der Ansprüche 1 bis 3, wobei der mindestens eine Sensor (2) Sensoren (2) umfasst, die auf der Backbordseite des Rumpfes gelegen sind, und/oder Sensoren (2), die auf der Steuerbordseite des Rumpfes gelegen sind.

5. Wasserfahrzeug nach einem der Ansprüche 1 bis 4, wobei die Sensoren (2) Sensoren (2) umfassen, die auf der Seite des Bugs des Rumpfes gelegen sind.

6. Wasserfahrzeug nach einem der Ansprüche 1 bis 5, wobei der mindestens eine Sensor (2) mindestens einen Sensor aus der folgenden Liste mit Sensoren umfasst:
- Beschleunigungsmesser,
- Vektorsensor,
- Geschwindigkeitsmesser,
- Drucksensor,
- piezoelektrisches Element.

7. Wasserfahrzeug nach einem der Ansprüche 1 bis 6, wobei der mindestens eine Sensor (2) mindestens einen 3-Achsen-Sensor umfasst.

8. Wasserfahrzeug nach einem der Ansprüche 1 bis 7, wobei das Detektionssystem mindestens eine Befestigungshalterung (5) umfasst, die es ermöglicht, den mindestens einen Sensor (2) an dem Rumpf auf der Innenseite des Rumpfes (3) zu befestigen, wobei die mindestens eine Befestigungshalterung (5) ferner dazu ausgestaltet ist, eine oder mehrere gegebene, Geräuschen entsprechende Frequenzen zu filtern, die verschieden von der oder den Lautfrequenzen von einem oder mehreren zu detektierenden Meeressäugetieren ist(sind).

9. Wasserfahrzeug nach einem der Ansprüche 1 bis 8, wobei der mindestens eine Sensor (2) mindestens einen Sensor umfasst, der eine Schallfrequenz-Empfangsempfindlichkeit im Bereich ]0 Hz - 200 kHz], bevorzugt im Bereich [10 Hz - 30 kHz], aufweist.

10. Wasserfahrzeug nach einem der Ansprüche 1 bis 9, wobei das Wasserfahrzeug ein Schiff ist, wobei das Schiff bevorzugt aus den folgenden Schiffstypen ausgewählt ist: Kreuzfahrtschiff, Fähre, Frachter, Bohrschiff und Fischereischiff.

11. Verfahren zur Detektion eines oder mehrerer Meeressäugetiere, wobei das Verfahren die folgenden Schritte umfasst:
- Koppeln (510) mindestens eines Sensors (2) mit dem Rumpf (3) eines Wasserfahrzeugs auf der Innenseite des Rumpfes (3);
- Empfangen (520) der Schallsignale über den Rumpf (3) mithilfe des mindestens einen Sensors (2);
- Analysieren (530) der von dem mindestens einen Sensor (2) ausgegebenen Signale; und
- Detektieren (540) des Vorhandenseins eines oder mehrerer Meeressäugetiere (4) in Abhängigkeit von der Analyse;
und wobei, wenn der Rumpf (3) des Fahrzeugs Spanten umfasst, die durch Bleche unterschiedlicher Abmessungen untereinander verbunden sind, das Koppeln des mindestens einen Sensors mit dem Rumpf (3) des Wasserfahrzeugs die folgenden Schritte umfasst:
- Auswählen mindestens eines Blechs unter den Blechen, dessen Resonanzfrequenz in dem Frequenzbereich der Schallwellen enthalten ist, die von einem oder mehreren Meeressäugetieren ausgesendet werden; und
- Koppeln des mindestens einen Sensors (2) mit dem mindestens einen ausgewählten Blech.

12. Verfahren nach Anspruch 11, **dadurch gekennzeichnet, dass** die von dem mindestens einen Sensor (2) empfangenen Schallsignale natürliche Signale sind, die von einem oder mehreren Meeressäugetieren ausgesendet werden, bevorzugt im Bereich ]0 Hz - 200 kHz], zum Beispiel im Bereich [10 Hz - 30 kHz].

## Claims

1. Marine craft having a hull (3) and comprising a detection system for detecting one or more marine mammals (4), said detection system comprising:
- at least one sensor (2) for receiving acoustic signals and converting them into electrical signals; and
- an analysis system (1) configured to analyse the electrical signals provided by said at least one sensor (2) and to detect the presence of one or more marine mammals (4) based on the analysis of said electrical signals;
**characterized in that** said at least one sensor (2) is coupled to the hull (3) on the interior side of the hull (3) in order to allow acoustic signals to be received via the hull (3),
wherein, the hull comprising frames and panels connecting the frames together, said at least one sensor (2) is fastened to at least one panel the resonant frequency of which is in the acoustic frequency range of calls of marine mammals, preferably in the range ]0 Hz - 200 kHz], and for example in the range [10 Hz - 30 kHz].

2. Marine craft according to Claim 1, wherein the detection system comprises a noise acquisition device (12) for receiving acoustic waves, such as vibrations, corresponding to noise, resulting for example from an engine (6) with which said craft is equipped, and for converting them into electrical signals,
and in that the detection system is configured to subtract the electrical signals provided by the noise acquisition device (12) from the electrical signals provided by said at least one sensor (2) that is coupled to the hull (3).

3. Marine craft according to either of Claims 1 and 2, wherein said marine craft having a waterline, said at least one sensor (2) is located below the waterline.

4. Marine craft according to any of Claims 1 to 3, wherein said at least one sensor (2) comprises sensors (2) located on the port side of the hull, and/or sensors (2) located on the starboard side of the hull.

5. Marine craft according to any of Claims 1 to 4, wherein the sensors (2) comprise sensors (2) located on the bow side of the hull.

6. Marine craft according to any of Claims 1 to 5, wherein said at least one sensor (2) comprises at least one sensor from the following list of sensors:
- accelerometer,
- vector sensor,
- velocimeter,
- pressure sensor,
- piezoelectric element.

7. Marine craft according to any of Claims 1 to 6, wherein said at least one sensor (2) comprises at least one 3-axis sensor.

8. Marine craft according to any of Claims 1 to 7, wherein the detection system comprises at least one fastening bracket (5) for fastening said at least one sensor (2) to the hull, on the interior side of the hull (3), said at least one fastening bracket (5) further being configured to filter one or more given frequencies corresponding to noise, said one or more given frequencies being distinct from the one or more call frequencies of one or more marine mammals to be detected.

9. Marine craft according to any of Claims 1 to 8, wherein said at least one sensor (2) comprises at least one sensor that has an acoustic frequency reception sensitivity in the range ]0 Hz - 200 kHz], and preferably in the range [10 Hz - 30 kHz].

10. Marine craft according to any of Claims 1 to 9, wherein said marine craft is a vessel, said vessel preferably being selected from the following types of vessel: cruise ship, ferry, cargo ship, drilling ship, and fishing vessel.

11. Method for detecting one or more marine mammals, said method comprising the following steps:
- coupling (510) at least one sensor (2) to the hull (3) of a marine craft, on the interior side of the hull (3);
- receiving (520), using said at least one sensor (2), acoustic signals via the hull (3);
- analysing (530) the signals provided by said at least one sensor (2); and
- detecting (540) the presence of one or more marine mammals (4) depending on said analysis;
and, the hull (3) of the craft comprising frames connected together by panels of various dimensions, coupling said at least one sensor to the hull (3) of the marine craft comprises the steps of:
- selecting from said panels at least one panel the resonant frequency of which lies in the frequency range of the acoustic waves emitted by one or more marine mammals; and
- coupling said at least one sensor (2) to said at least one selected panel.

12. Method according to Claim 11, **characterized in that** the acoustic signals received by said at least one sensor (2) are natural signals emitted by one or more marine mammals, preferably in the range ]0 Hz - 200 kHz], and for example in the range [10 Hz - 30 kHz].
